(19) Europäisches Patentamt / European Patent Office / Office européen des brevets

(11) **EP 3 883 106 B1**

(12) **EUROPEAN PATENT SPECIFICATION**

(45) Date of publication and mention
of the grant of the patent:
**24.12.2025 Bulletin 2025/52**

(51) International Patent Classification (IPC):
***H02M 1/36*** *(2007.01)*     ***H02M 7/12*** *(2006.01)*
*H02M 3/155* *(2006.01)*     *H02M 7/219* *(2006.01)*

(21) Application number: **20163700.6**

(52) Cooperative Patent Classification (CPC):
**H02M 1/36; H02M 1/327; H02M 7/125;** H02M 3/155;
H02M 7/219

(22) Date of filing: **17.03.2020**

(54) **ELECTRONIC CIRCUIT WITH A POWER CONVERTER AND AN OUTPUT CAPACITOR**

ELEKTRONISCHE SCHALTUNG MIT EINEM LEISTUNGSWANDLER UND EINEM AUSGANGSKONDENSATOR

CIRCUIT ÉLECTRONIQUE DOTÉ D'UN CONVERTISSEUR DE PUISSANCE ET D'UN CONDENSATEUR DE SORTIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.09.2021 Bulletin 2021/38**

(73) Proprietor: **Infineon Technologies Austria AG 9500 Villach (AT)**

(72) Inventors:
• **PEVERE, Alessandro 9500 Villach (AT)**
• **KUTSCHAK, Matteo-Alessandro 9072 Ludmannsdorf (AT)**

(74) Representative: **Westphal, Mussgnug & Partner, Patentanwälte mbB Werinherstraße 79 81541 München (DE)**

(56) References cited:
EP-A1- 3 567 711     EP-A2- 2 860 863
WO-A1-2017/206684     JP-A- 2015 142 485
US-A1- 2002 196 644

**Description**

This disclosure relates in general to a circuit arrangement with a power converter stage and an output capacitor coupled to the power converter stage.

JP 2015-142485 A discloses a power supply device with a converter stage, an output circuit, and a bypass circuit connected between an input and the output circuit. The output circuit includes a capacitor, a current limiting element connected in series with the capacitor, and an electronic switch connected in parallel with the current limiting element A control unit is configured to switch on the electronic switch when a difference between an input voltage received at the input and a voltage across the capacitor is lower than a predefined threshold, and to switch off the electronic switch when the difference between the input voltage and the voltage across the capacitor is higher than the predefined threshold.

WO 2017/206684 A1 discloses a driving control method, a driving control circuit, and a system for a totem-pole bridgeless circuit. The method includes: acquiring, for each return transistor to be controlled in a totem-pole bridgeless circuit, a return transistor voltage; generating a first control signal by comparing the return transistor voltage with a first control reference voltage; simultaneously acquiring an alternating-current input voltage of the totem-pole bridgeless circuit; generating a second control signal by comparing the alternating-current input voltage with a second control reference voltage; and processing a first driving control signal and a second driving control signal to obtain a driving control signal for controlling the return transistor to be controlled.

EP 3 567 711 A1 discloses an on-board bidirectional charger that includes a PFC-inverter module, and a module for suppressing inrush current. The module for suppressing inrush current includes a controlled switch and a resistor connected in parallel with the controlled switch, wherein the parallel circuit including the resistor and the controlled switch are connected in series with a capacitor. The controlled switch is switched on when a voltage across the capacitor has reached a voltage level that corresponds to an amplitude of an alternating voltage received by the PFC-inverter module.

One aspect of the invention is defined by an electronic circuit according to claim 1.

Another aspect of the invention is defined by a method according to claim 10.

Examples are explained below with reference to the drawings. The drawings serve to illustrate certain principles, so that only aspects necessary for understanding these principles are illustrated. The drawings are not to scale. In the drawings the same reference characters denote like features.

Figure 1 illustrates one example of an electronic circuit that includes a converter stage coupled between an input and an output, and an output circuit with an output capacitor and a main switch circuit coupled to the converter stage and the output;

Figure 2 illustrates one example of a main switch circuit that includes a main switch, a resistor connected in parallel with the main switch, and a control circuit;

Figure 3 illustrates one example of the control circuit;

Figure 4 illustrates another example of the control circuit;

Figure 5 illustrates another example of the control circuit;

Figure 6 shows signal waveforms of signals occurring in the control circuit according to Figure 4;

Figure 7 illustrates one example of the converter stage;

Figure 8 illustrates a modification of the electronic circuit shown in Fig-ure 7;

Figure 9 illustrates another example of the converter stage; and

Figure 10 illustrates an electronic circuit that includes a further converter stage connected to the output.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

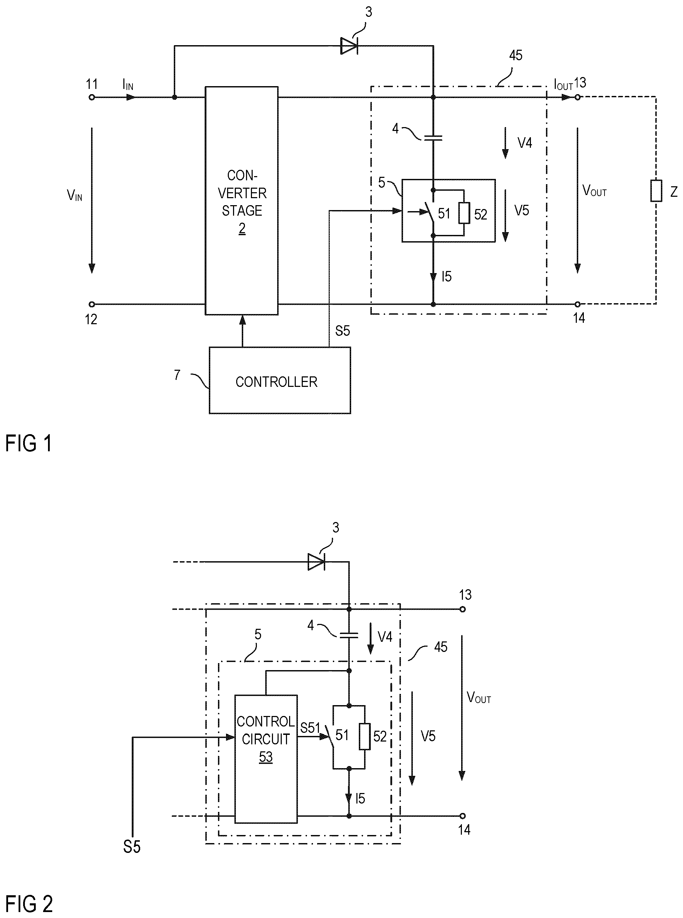

Figure 1 shows one example of an electronic circuit. This electronic circuit includes an input 11, 12 configured to receive an input voltage $V_{IN}$ and an output 13, 14 configured to provide an output voltage $V_{OUT}$. The input includes a first input node 11 and a second input node 12 between which the input voltage $V_{IN}$ is received, and the output includes a first output node 13 and the second output node 14 between which the output voltage $V_{OUT}$ is provided. The electronic circuit further includes a converter stage 2 that is coupled between the input 11, 12 and the output 13, 14, an output circuit 45 coupled to the converter stage 2 and the output 13, 14, and a bypass circuit 3 coupled between the input 11, 12 and the output circuit 45.

Referring to Figure 1, the output circuit 45 includes an output capacitor 4 and a main switch circuit 5. The main switch circuit 5 includes a main switch 51 connected in series with the output capacitor 4 and a resistor 52 connected in parallel with the main switch 51. A series circuit including the output capacitor 4 and a parallel circuit with the main switch 51 and the resistor 52 is connected between the first output node 13 and the second output node 14.

The bypass circuit 3 bypasses the converter stage 2. According to one example, the bypass circuit 3 includes a rectifier element which is connected between the input 11, 12 and the output 13, 14 in such a way that a current can flow from the input 11, 12 to the output circuit 45, but not from the output circuit 45 to the input. In this way, the output capacitor 4 can be charged via the bypass circuit 3 by an input current $I_{IN}$ that is associated with the input voltage $V_{IN}$, but cannot be discharged via the bypass circuit 3. According to one example, as illustrated in Figure 1, the bypass circuit 3 is connected between the first input node 11 and the first output node 13. The rectifier element may be a passive rectifier element (as illustrated) or an active rectifier element (not illustrated), such as a transistor operated as a synchronous rectifier (SR) diode and includes a diode as a rectifier element. The diode may be a pn-diode. In the example illustrated in Figure 1, the passive rectifier element is a pn diode. This, however, is only an example. Any other kind of passive rectifier element, such as a Schottky diode, may be used as well.

The main switch circuit 5 is configured to switch on the main switch 51 dependent on a control signal S5 received by the main switch circuit 5 and dependent on at least one of a current I5 through the output circuit 45 and a voltage V5 across the main switch 51. This is explained in further detail herein below.

According to one example, the electronic circuit operates in one of four different operating modes.

(a) In a first operating mode, which is also referred to as normal mode in the following, the converter stage 2 is activated and the control signal S5 has an on-level that switches on the main switch 51. When the converter stage is activated it generates the output voltage $V_{OUT}$ at the output 13, 14 based on the input voltage $V_{IN}$. In this operating mode, the voltage V4 across the output capacitor 4 essentially equals the output voltage $V_{OUT}$.

(b) In a second operating mode, which is referred to as start-up mode in the following, the converter stage 2 is deactivated and the control signal S5 has an off-level that switches off the main switch 51 is switched off. In this operating mode, when an input voltage $V_{IN}$ different from zero is applied to the input 11, 12 and the output capacitor 4, at first, is discharged, the output capacitor 4 is charged via the bypass circuit 3 and the resistor 52 connected in parallel with the main switch 51. The output capacitor 4 is charged until the voltage V4 across the output capacitor 4 essentially equals the maximum voltage level of the input voltage $V_{IN}$. In the start-up mode, the resistor 52 enables the output capacitor 4 to be charged and, at the same time, limits the inrush current when charging the output capacitor 4.

(c) In a third operating mode, which is referred to as off-mode in the following, the input voltage $V_{IN}$ is zero, the converter stage 2 is deactivated, and the control signal S51 has an off-level so that, under normal circumstances, the main switch 51 is switched off.

(d) In the start-up mode and the off-mode, in which the main switch 51 is switched off, the output voltage $V_{OUT}$, which is the voltage across the output circuit 45, may rapidly increase for a short time period. Such rapid increase of the output voltage $V_{OUT}$ may result from an ESD (Electrostatic Discharge) event at the input 11, 12 or at any other position in the electronic circuit between the input 11, 12 and the output 13, 14. A voltage pulse at the output 13, 14 resulting from an ESD event is referred to as ESD pulse or surge pulse in the following. Such surge pulse may result in a relatively high current through the resistor 52. This high current may result in a high power dissipated in the resistor 52, wherein such high power dissipation may result in an overheating of the resistor 52 and, therefore, a damage of the electronic circuit. Moreover, the surge pulse may even result in an overvoltage across the main switch 51 and, therefore, a voltage breakdown of the main switch 51. Such overvoltage may result from a high current through the resistor 51. According to on example, a resistance of this resistor 52 is at least 50 times, at least 100 times, or at least 500 times the on-resistance of the main switch 51. The "on-resistance" of the main switch 51 is the electrical resistance of the main switch 51 in the on-state. According to one example, the resistance of the resistor 52 is between 30 ohms ($\Omega$) and 500 $\Omega$, in particular between 50 $\Omega$ and 150 $\Omega$.

In order to prevent such overheating of the resistor 52 the main switch circuit 5 is configured to switch on the main switch 51 independent on the control signal S5 when, in the off-mode or the start-up mode, a high current level of the current I5 through the output circuit 45 and/or a high-voltage level of the voltage V5 across the main switch 51 occurs. An operating mode in which the control signal S5 has an off-level and the main switch 51 is switched on based on the current I5 and/or the voltage V5 is referred to as fourth operating mode or surge pulse protection mode in the following.

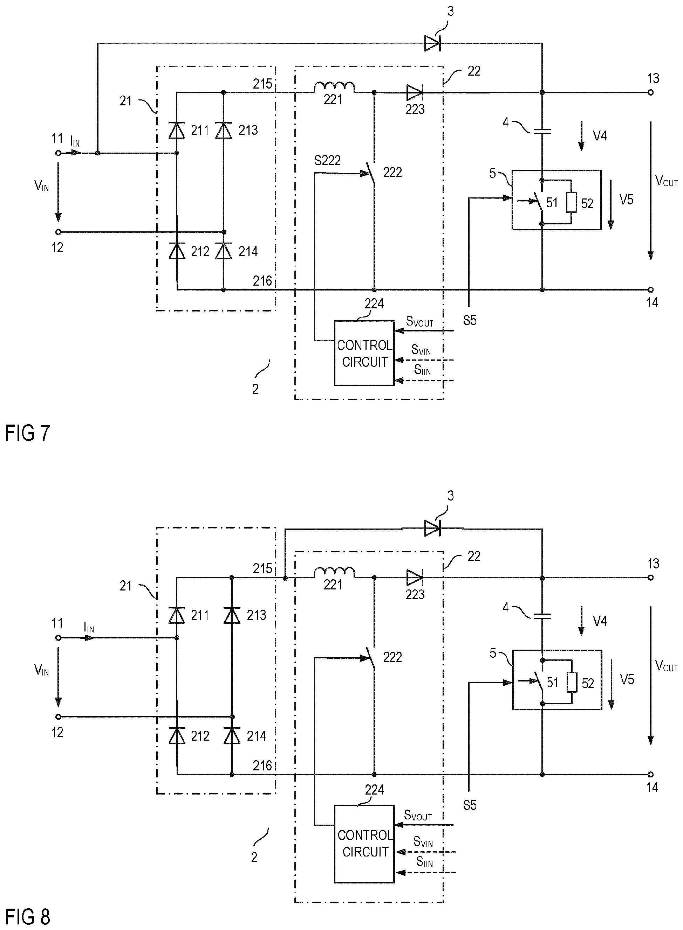

The converter stage 2 may be any kind of voltage converter, in particular, a switched-mode voltage converter. Examples of a switched-mode voltage converter are explained with reference to Figures 7 and 8 herein further below.

The input voltage $V_{IN}$ is either a direct voltage or an alternating voltage, such as a sinusoidal voltage. The output voltage $V_{OUT}$ is a direct voltage, for example. When the input voltage $V_{IN}$ is a direct voltage the output capacitor 4 is charged in the start-up mode such that the voltage V4 across the capacitor 4, and finally the output voltage $V_{OUT}$, essentially equals the voltage level of the input voltage $V_{IN}$. When the input voltage $V_{IN}$ is an alternating voltage the output capacitor 4 is charged in the start-up mode such that the voltage V4 across the capacitor 4, and finally the output voltage $V_{OUT}$, essentially equals the maximum voltage level (that is, the amplitude level) of the input voltage $V_{IN}$.

According to one example, the converter stage 2 is a boost converter stage so that in the normal mode a voltage level of the output voltage $V_{OUT}$ is higher than a (maximum) voltage level of the input voltage $V_{IN}$. In the normal mode, the bypass circuit 3 is inactive. That is, the rectifier element included in the bypass circuit 3 blocks, so that the output voltage $V_{OUT}$ in the normal mode is only governed by the converter stage 2.

Referring to Figure 1, a load Z (illustrated in dashed lines) can be connected to the output 13, 14 and receive the output voltage $V_{OUT}$ and an output current $I_{OUT}$ from the converter stage 2 and the output capacitor 4. When the electronic circuit changes from the start-up mode to the normal mode, the output capacitor 4 is further charged by the converter stage 2 so that the output voltage $V_{OUT}$ increases to a predefined voltage level that is regulated by the converter stage.

As the name suggests, the main switch 51 controls a power supply of the load Z. Thus, when the main switch 51 switches off in the normal mode the power consumption of the load Z is interrupted.

The control signal S5 may be generated by a controller 7 (illustrated in dashed lines). This controller 7 may also be configured to activate and deactivate the converter stage 2 and, therefore, control a transfer of the electronic circuit from the start-up mode (the second operating mode (b)) to the normal mode (the first operating mode (a)) or from the normal mode to the off-mode (the third operating mode (c)). According to one example, the controller 7 is configured to monitor the output voltage $V_{OUT}$ and change from the start-up mode to the normal mode when the output voltage $V_{OUT}$, by charging the output capacitor 4 via the bypass circuit 3, has reached a predefined voltage threshold. This voltage threshold may be lower than a maximum voltage level of the input voltage $V_{IN}$ or may be equal to the maximum voltage level of the input voltage $V_{IN}$ The controller 7 may be implemented as a microcontroller, or the like.

Referring to the above, in the startup-mode, the converter stage 2 is deactivated and the main switch 51 is switched off. This kind of start-up mode is referred to as first startup-mode in the following. According to one example, in addition to the first start-up mode or as an alternative to the first start-up mode, the electronic circuit may be configured to operate in

(e) a fifth operating mode, which is also referred to as second start-up mode in the following. In the second start-up mode, the converter stage 2 is active and the main switch 51 is switched off. In this operating mode, the output capacitor 4 is charged by the converter stage 2. As long as the voltage level of the output voltage $V_{OUT}$ is below the maximum of the input voltage $V_{IN}$ the output capacitor 4 may be charged via the bypass circuit 3 in addition to being charged via the converter stage 2. The charging current of the output capacitor 4 flows via the resistor 52 in the second start-up mode.

According to one example, the electronic circuit, controlled by the controller 7, operates in the first start-up mode as soon as an input voltage $V_{IN}$ different from zero is available at the input 11, 12 and until the output voltage $V_{OUT}$ reaches a first voltage threshold. This first voltage threshold may be lower than a maximum voltage level of the input voltage $V_{IN}$ or may be equal to the maximum voltage level of the input voltage $V_{IN}$. Further, in this example, the electronic circuit changes to the second start-up mode, in which the output capacitor 4 is charged via the converter stage 2, when the output voltage $V_{OUT}$ has reached the first voltage threshold. When the output voltage $V_{OUT}$ reaches a second voltage threshold that is higher than the first voltage threshold the electronic circuit changes to the normal mode. The second voltage threshold may be lower than a desired voltage level (setpoint) of the output voltage $V_{OUT}$ or may be equal to this desired voltage level.

According to another example, the first start-up mode is omitted in the operation of the electronic circuit. In this example, the electronic circuit, controlled by the controller 7, operates in the second start-up mode as soon as an input voltage $V_{IN}$ different from zero is available at the input 11, 12 and until the output voltage $V_{OUT}$ reaches a predefined voltage threshold. This voltage threshold can be lower than the maximum voltage level of the input voltage $V_{IN}$ or can be higher than the maximum voltage level of the input voltage $V_{IN}$. Further, This second voltage threshold can be lower than a desired voltage level (setpoint) of the output voltage $V_{OUT}$ or can be equal to this desired voltage level. The electronic circuit operates in the normal mode when the output voltage $V_{OUT}$ has reached the predefined voltage threshold.

Referring to Figure 2, which shows one example of the main switch circuit 5 in greater detail, the main switch circuit 5 includes a control circuit 53. This control circuit 53 receives the control signal S5 and is configured to generate a drive signal S51 received by the main switch 51 dependent on the control signal S5 and dependent on at least one of the voltage V5 across the main switch 51 and the current I5 through the output circuit 45. The drive signal S51 either has an on-level that switches on the main switch 51 or an off level that switches off the main switch 51. The main switch 51 can be any kind of electronic switch. According to one example, the main switch 51 is a transistor, such as a MOSFET (Metal Oxide Semiconductor Field-Effect Transistor). Different examples of the control circuit 53 are explained in the following.

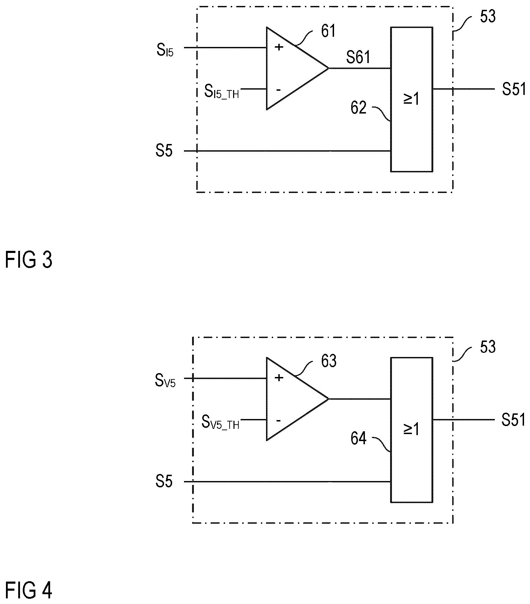

Figure 3 schematically illustrates one example of a control circuit 53 that is configured to switch on the main switch 51 (not illustrated in Figure 3) dependent on the control signal S5 and the current I5 through the output circuit 45. It should be noted that Figure 3 schematically illustrates the functionality of the control circuit 53 rather than a specific implementation. In this example, the control circuit 53 includes a comparator 61 that receives a current measurement signal $S_{I5}$, wherein the current signal $S_{I5}$ represents the current I5 through the output circuit 45. The current measurement signal $S_{I5}$ may be generated by any kind of current sensor that is configured to measure the current I5 through the output circuit 45. Such current sensors are commonly known so that no further explanation is required in this regard. The comparator 61 further receives a current threshold signal $S_{I5\_TH}$ and is configured to compare the current signal $S_{I5}$ with the current threshold signal $S_{I5\_TH}$. An output signal S61 of the comparator has a first signal level or a second signal level dependent on whether the current signal $S_{I5}$ is higher or lower than the current threshold signal $S_{I5\_TH}$.

The control circuit 53 shown in Figure 3 generates the drive signal S51 such that the drive signal S51 switches on the main switch 51 whenever the current measurement signal $S_{I5}$ is higher than the current threshold signal $S_{I5\_TH}$ or the control signal S5 has an on-level. For this, the control signal S5 and the comparator output signal S61 is received by a logic gate 62. The logic gate 62 generates the drive signal S51 based on the comparator output signal S61 and the control signal S5. The logic gate 62 is configured to generate an on-level of the drive signal S51, in order to switch on the main switch 51, whenever the comparator output signal S61 indicates that the current I5 represented by the current measurement signal $S_{I5}$ is higher than a predefined current threshold represented by the threshold signal $S_{I5\_TH}$ or when the control signal S5 indicates that it is desired to switch on the main switch 51. Just for the purpose of illustration, the logic gate 62 in Figure 3 is an OR-gate.

Figure 4 illustrates a control circuit 53 according to another example. This control circuit is configured to switch on the main switch 51 when the voltage V5 across the main switch is higher than a predefined voltage threshold. For this, the control circuit 53 receives a voltage measurement $S_{V5}$ that represents the voltage V5 and compares the voltage measurement signal $S_{V5}$ with a voltage threshold signal $S_{V5\_TH}$ that represents the voltage threshold. A comparator 63 compares the voltage measurements signal $S_{V5}$ with the voltage threshold signal $S_{V5\_TH}$.

Further, the control circuit 53 is configured to switch on the main switch 51 whenever a comparator output signal S63 indicates that the voltage V5 represented by the voltage measurement signal $S_{V5}$ is higher than the voltage threshold represented by the voltage threshold signal $S_{V5\_TH}$. A logic gate 64 receives the comparator output signal S63 and the control signal S5 and is configured to switch on the main switch 51 whenever the comparator output signal S63 indicates that the voltage V5 is higher than the voltage threshold or when the control signal S5 indicates that it is desired to switch on the main switch 51.

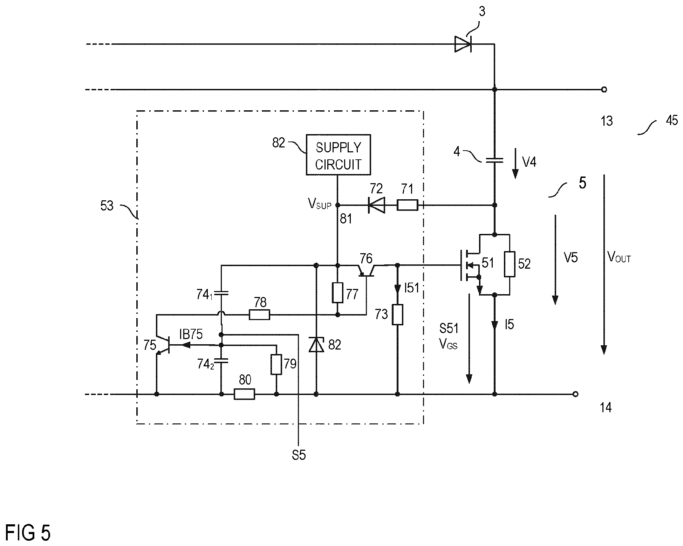

Figure 5 illustrates on example of a control circuit 53 that is configured to switch on the main switch 51 dependent on the current I5 through the output circuit 55. Just for the purpose of illustration, the main switch 51 is a MOSFET, and the drive signal S51 received by the MOSFET 51 is a gate-source voltage $V_{GS}$ of the MOSFET. More specifically, in the example shown in Figure 5, the MOSFET is an n-type enhancement MOSFET. This type of MOSFET switches on when the gate-source voltage $V_{GS}$ is higher than a threshold voltage of the MOSFET.

Referring to Figure 5, the control circuit 53 includes a supply node 81 at which a supply voltage $V_{SUP}$ is available. This supply voltage $V_{SUP}$ is either provided by a supply circuit 82 or is derived from the voltage V5 across the parallel circuit with the main switch 51 and the resistor 52.

In a normal mode of the electronic circuit, the supply voltage $V_{SUP}$ is provided by the supply circuit 82. The supply circuit 82 can be a conventional supply circuit configured to provide a supply voltage. The supply circuit 82 may be coupled to the input 11, 12 in order to generate the supply voltage $V_{SUP}$ based on the input voltage $V_{IN}$ or to the output 13, 14 in order to generate the supply voltage $V_{SUP}$ based on the output voltage $V_{OUT}$. According to another example, the supply circuit 82 is coupled to an inductor in the converter stage 2 and generates the supply voltage $V_{SUP}$ based on energy received from the inductor. The supply voltage $V_{SUP}$ has a voltage level that is suitable to switch on the main switch 51. According to one example, the voltage level of the supply voltage is between 3V and 15V, for example.

In a normal mode, when the main switch 51 is switched on, the voltage V5 across the main switch is lower than the supply voltage $V_{SUP}$ provided by the supply circuit 82, so that in the normal mode the supply voltage $V_{SUP}$ is governed by the supply circuit 82.

In the off-mode, the supply circuit 82 may be deactivated. In this operating mode, the supply voltage $V_{SUP}$ essentially equals the voltage V5 across the parallel circuit with the main switch 51 and the resistor 52. For this, the supply node 81 is coupled to this parallel circuit via a resistor 71 and a rectifier element 72. The rectifier element 72 may be a diode and may be connected between the parallel circuit and the supply node 81 in such a way that the rectifier element 72 prevents a current flow from the supply node 81 via the main switch 51 when the electronic circuit is in the normal mode and the supply voltage $V_{SUP}$ is higher than the voltage V5 across the main switch.

Referring to Figure 5, the control circuit 53 includes a current sensor, wherein this current sensor is implemented as a shunt resistor 80 connected in series with the parallel circuit including the main switch 51 and the resistor 52. This shunt resistor 80 is connected in parallel with a series circuit including a base-emitter path of a first bipolar transistor 75 and a resistor 79 connected to the base of the first bipolar transistor 75. This resistor 79 is also referred to as a base resistor in the following. In the off-mode of the electronic circuit, when a surge pulse occurs in the electronic circuit a current I5 flows through the output capacitor 4 and the resistor 52. When this current I5 reaches a certain current threshold, a base current via the base resistor 79 into the first bipolar transistor 75 causes the bipolar transistor 75 to switch on. The current threshold of the current I5 at which the first bipolar transistor 75 switches on can be adjusted by suitably adjusting resistances of the shunt resistor 80 and the base resistor 79.

Referring to Figure 5, a collector of the first bipolar transistor 75 is coupled to a base of a second bipolar transistor 76 via a resistor 78 so that the first bipolar transistor 75 controls a base current of the second bipolar transistor 76. An emitter of the second bipolar transistor 76 is coupled to the supply node 81. Further, the emitter of the second bipolar transistor 76 is connected to the collector of the first bipolar transistor 75 via a further resistor 77 and the resistor 78. The collector of the second bipolar transistor 76 is coupled to the gate of the main switch 51.

When the first bipolar transistor 75 switches on, the second bipolar transistor 76 switches on and connects the gate of the main switch 51 to the supply node 81 so that the main switch 51 switches on. In this example, the gate-source voltage $V_{GS}$ equals a voltage across a resistor 73 connected between the gate node G and the source node S, wherein this voltage is dependent on a resistance of the resistor 73 and a current I51 provided by the supply node. A Zener diode 82 connected between the gate node G and the source node S of the main switch 51 protects the main switch 51 against an overvoltage.

Optionally, a series circuit with a first capacitor $74_1$ and a second capacitor $74_2$ is connected between the supply node 81 and a circuit node common to the first bipolar transistor 75 and the shunt resistor 80, that is, between the supply node 81 and the emitter node of the bipolar transistor 75. A tap of the this capacitor series circuit, which is a circuit node common to the first capacitor $74_1$ and the second capacitor $74_2$, is connected to the base of the first bipolar transistor 75. This capacitor series circuit serves as a filter for filtering the supply voltage $V_{SUP}$ and the voltage received at the base of the first bipolar transistor 75.

Further, the control signal S5 is received at the base of the first bipolar transistor 75 so that the first bipolar transistor 75 switches on (and the main switch 51 switches on) either dependent on the current through the shunt resistor 80 or the control signal. In this example, the on-signal of the control signal S51 is a signal level that switches on the first bipolar transistor 75.

When the electronic circuit is in the off-state and a surge pulse occurs, the current I5 through the output circuit 45 is essentially given by

$$I5 = C4 \cdot \frac{dV4}{dt} \quad (1),$$

wherein C4 denotes a capacitance of the output capacitor 4 and dV4/dt denotes a time derivative of the voltage V4 across the output capacitor. This time derivative of the voltage V4 across the capacitive 4 is dependent on the time derivative of the output voltage $V_{OUT}$ and increases as the time derivative $dV_{OUT}/dt$ of the output voltage $V_{OUT}$ increases. In the off-mode, the time derivative $dV_{OUT}/dt$ of the output voltage $V_{OUT}$ is dependent on a slope of a surge pulse occurring in the off-mode. Basically, the higher the slope of the surge pulse the higher the current I5. Thus, the main switch 51 will not switch on when a slope of the search pulse is rather low.

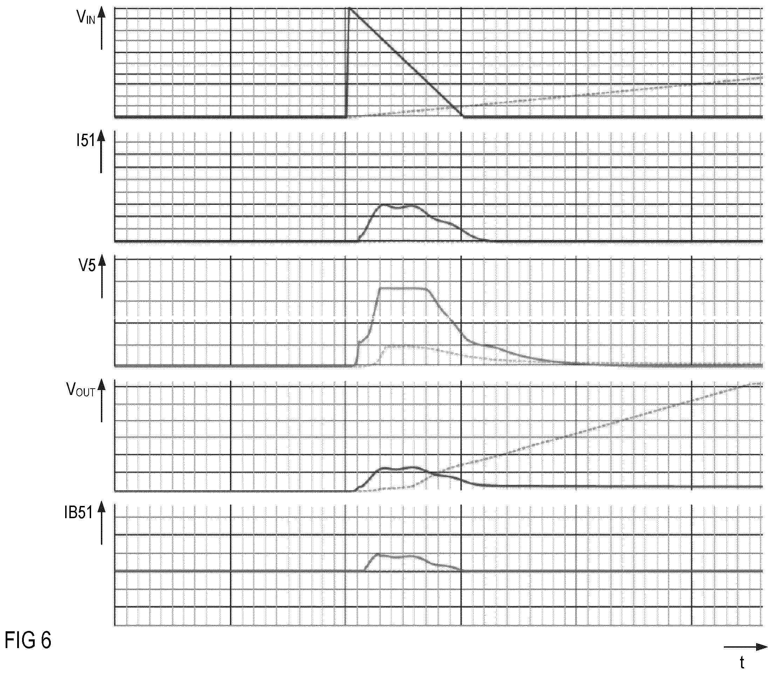

This is illustrated in Figure 6 in which solid lines and dotted lines illustrates signal diagrams of the input voltage $V_{IN}$, the current I51 through the resistor 73 connected between gate and source of the MOSFET forming the main switch 51, the voltage across the main switch 51, the output voltage $V_{OUT}$ and a base current IB51 of the first bipolar transistor 75 in two different scenarios. In a first scenario, illustrated in solid lines, a surge pulse with a relatively steep rising slope occurs at the input 11, 12. This has the effect that a current pulse of the current I5 through the output circuit 45 and the shunt resistor 80 occurs that is high enough to switch on the first bipolar transistor 75 and, therefore, the second bipolar transistor 75 and the main switch 51. The voltage V5 increases at first and is then clamped as the main switch 51 switches on. In a second scenario, illustrated in dashed lines, a surge pulse with a relatively shallow rising slope occurs at the input 11, 12. This has the effect that no current pulse suitable to switch on the first bipolar transistor 75 occurs.

Figure 7 illustrates one example of the converter stage 2 in greater detail. The converter stage 2 shown in Figure 7 is configured to receive an alternating voltage at the input 11, 12 and includes a rectifier circuit 21 connected to the input 11, 12 and a boost stage 22 connected between the rectifier circuit 21 and the output 13, 14. The rectifier circuit 21 is a bridge rectifier with four rectifier elements 211, 212, 213, 214. Just for the purpose of illustration, the rectifier elements 211-214 are diodes in this example. It goes without saying that these rectifier elements may be implemented as active rectifier elements (synchronous rectifiers, SR) as well. The rectifier circuit 21 is configured to rectify the input voltage $V_{IN}$ such that the boost stage 22 receives a rectified voltage from the rectifier circuit 21. If, for example, the input voltage $V_{IN}$ is a sinusoidal input voltage, the voltage received by the boost stage 22 from the rectifier circuit 21 is a rectified sinusoidal voltage.

Referring to Figure 7, the boost stage includes a series circuit with an inductor 221 and a switch 222, wherein this series circuit is connected between output nodes 215, 216 of the rectifier circuit 21. The switch 222 is controlled by a control circuit 224, wherein energy is stored in the inductor 221 (which may be a choke) whenever the switch 222 is switched on. When the switch 222 switches off, the energy stored in the inductor 221 is transferred to the output 13, 14 and the output circuit 45 via a rectifier element 223. The rectifier element 223 may be a passive rectifier element (such as a diode) or an active rectifier element.

The control circuit 224 may configured, in the normal mode, to control switching on and switching off of the electronic switch 222 such that a voltage signal of the output voltage $V_{OUT}$ equals a predefined voltage level (which may also be referred to as setpoint). For this, the control circuit 224 receives a voltage measurement signal $S_{VOUT}$ that represents the output voltage $V_{OUT}$ and generates a pulse-width modulated (PWM) drive signal S222 received by the electronic switch 222 based on comparing the voltage measurement signal $S_{VOUT}$ with a reference signal that represents the set-point. A boost converter stage 22 of this type is commonly known, so that no further explanation is required in this regard.

The control circuit 224 may receive an activation signal from the controller (see reference number 7 in Figure 1). The activation signal indicates whether the converter stage is to be activated or deactivated, wherein the control circuit 224 only operates the electronic switch 222 in a PWM fashion in order to regulate the output voltage $V_{OUT}$ when the activation signal (not shown in Figure 7) indicates that the converter stage is to be activated.

In addition to regulating the output voltage $V_{OUT}$ the converter stage 22 may be configured to regulate an input current $I_{IN}$ received at the input 11, 12 such that an average of the input current $I_{IN}$ is essentially proportional to the input voltage $V_{IN}$. For this, the control circuit 224 may further receive an input voltage signal $S_{VIN}$ (illustrated in dashed lines) that represents the input voltage $V_{IN}$ and an input current signal $S_{IIN}$ (illustrated in dashed lines) that represents the input current $I_{IN}$ and generate the drive signal S222 dependent on the input voltage signal $S_{IN}$ and the input current signal $S_{IIN}$. Regulating the input current $I_{IN}$ such that an average of the input current $I_{IN}$ is essentially proportional to the input voltage $V_{IN}$ is usually referred to as power factor correction (PFC). A boost converter stage 22 of the type shown in Figure 7 and having a PFC capability is commonly known so that no further explanations are required in this regard.

According to one example, the shunt resistor 80 of the control circuit 53 shown in Figure 5 is used for generating the input current signal $S_{IIN}$. In this example, a voltage across the shunt resistor 80 is input as the current measurement signal $S_{IIN}$ into the control circuit 224.

In the example shown in Figure 7, the bypass circuit 3 is connected between the first input node 11 and the first output node 13. In this example, in the start-up mode, the output capacitor 4 is either charged only during positive half-waves or only during negative half-waves of the input voltage $V_{IN}$.

Figure 8 shows a modification of the electronic circuit shown in Figure 7. In the electronic circuit shown in Figure 8, the bypass circuit 3 is connected between the rectifier circuit 21 and the output 13, 14. More specifically, the bypass circuit 3 is connected between a first output node 215 of the rectifier circuit 21 and the first output node 13 of the electronic circuit, in this example. In the electronic circuit according to Figure 8, the output capacitor 4, in the start-up mode, is charged during the positive half-waves and negative half-waves of the alternating input voltage $V_{IN}$.

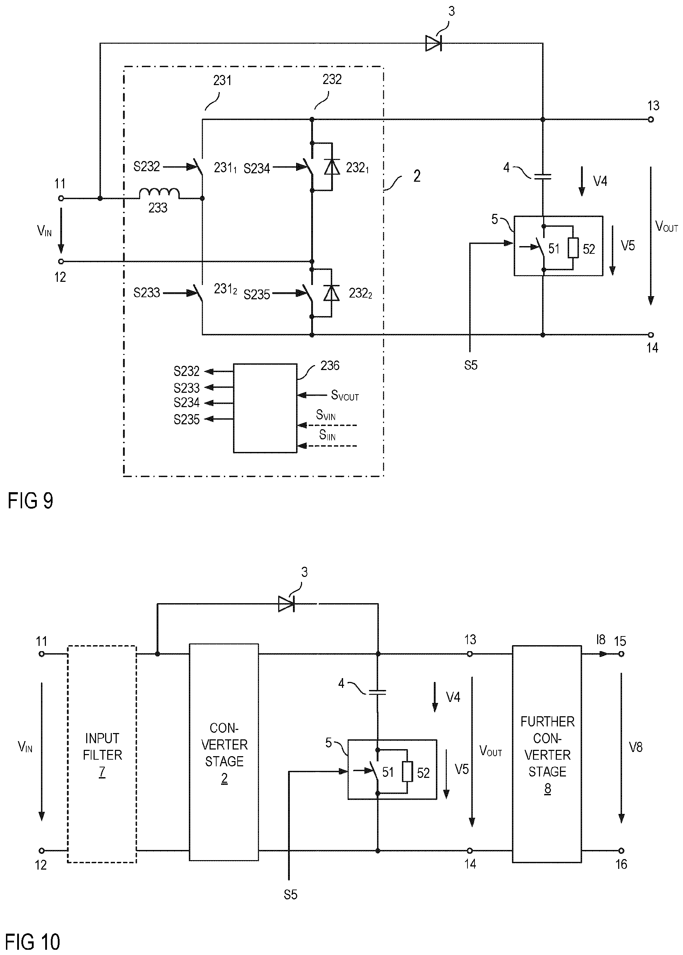

Implementing the converter stage 2 with a rectifier circuit 21 and a boost converter stage 22 is only an example. Any other kind of converter stage with a boost capability may be used as the converter stage 2 as well. Figure 9 shows another example of a converter stage 2 with a boost capability. In this example, the converter stage 2 has a totem-pole topology. In this example, the converter stage 2 includes a first half-bridge 231 and a second half-bridge 232, wherein each of these half-bridges includes a high-side switch $231_1$, $232_1$ and low-side switch $231_2$, $232_2$. The high-side switch and the low-side switch of each of the two half-bridges 231, 232 are connected in series between the first output node 13 and the second output node 14. Each of the two half-bridges 231, 232 includes a tap, which is a circuit node between the high-side switch $231_1$, $232_1$ and the low-side switch $231_2$, $232_2$ of the each half-bridge 231, 232. The tap of the first half-bridge 231 is coupled to the first input node 11 via an inductor 233, which may be a choke. The tap of the second half-bridge 232 is connected to the second input node 12. The high-side switches $231_1$, $232_1$ and the low-side switches $231_2$, $232_2$ may be conventional electronic switches such as, for example, MOSFETs (Metal Oxide Semiconductor Field-Effect Transistors), IGBTs, or the like.

A control circuit 236 is configured to drive the half-bridges 231, 232 such that a voltage level of the output $V_{OUT}$ has a predefined level (set-point). For this, the control circuit 236 receives an output voltage signal $S_{VOUT}$ that represents the output voltage $V_{OUT}$. In addition, the control circuit 236 may receive an input voltage signal $S_{VIN}$ and an input current signal $S_{IIN}$ in order to additionally control the input current $I_{IN}$ such that an average of the input current is essentially proportional to the input voltage $V_{IN}$. A converter stage with a totem-pole topology and PFC capability of the type shown in Figure 9 is commonly known so that no detailed explanation is required in this regard. In brief, the control circuit 236 operates the switches $232_1$, $232_2$ of the second half-bridge 232 in a PWM fashion and complementarily such that only one of the high-side switch $232_1$ and the low-side switch $232_2$ is switched on at the same time. A switching frequency of these switches $232_1$, $232_2$ may be significantly higher than a frequency of the alternating input voltage $V_{IN}$ such as, for example, several kilohertz (kHz) or higher. The high-side switch $231_1$ and the low-side switch $231_2$ of the first half-bridge 231 are switched on and off synchronously with the alternating input voltage $V_{IN}$ such that during positive half-cycles of the input voltage $V_{IN}$, for example, the high-side switch $231_1$ is switched on and the low-side switch $231_2$ is switched off and during the negative half-cycles of the input voltage $V_{IN}$ the high-side switch $231_1$ is switched off and the low-side switch $231_2$ is switched on.

Referring to Figure 10, which shows a modification of the electronic circuit explained herein before, an optional input filter 7 may be connected between the input 11, 12 and the converter stage 2. This input filter may be implemented as a conventional EMI (Electromagnetic Interference) filter. Such filter 7 may be used in each of the electronic circuits explained herein before as well.

Referring to Figure 10, a further converter stage 8 may receive the output voltage $V_{OUT}$ and generate a further output voltage V8 based on the output voltage $V_{OUT}$ received from the converter stage 2 and the output circuit 45. The further converter stage 8 may be any kind voltage converter stage. Examples of this further converter stage 8 include, but are not restricted to a flyback converter stage, an LLC converter stage, or the like.

## Claims

1. An electronic circuit, comprising:

   an input (11, 12) configured to receive an input voltage ($V_{IN}$) and an output (13, 14) configured to provide an output voltage ($V_{OUT}$) to a load (Z); a converter stage (2) coupled between the input (11, 12) and the output (13, 14); an output circuit (45) coupled to the converter stage (2) and the output (13, 14), comprising an output capacitor (4) and a main switch circuit (5) connected in series with the output capacitor (4), wherein the output (13, 14) comprises a first output node (13) and a second output node (14) and the output circuit (45) is connected between the first output node (13) and the second output node (14); a bypass circuit (3) coupled between the input (11, 12) and the output circuit (45); and a controller (7) configured to activate and deactivate the converter stage (2) and provide a control signal (S5) to the main switch circuit (5), wherein the main switch circuit (5) comprises a main switch (51) , a resistor (52) connected in parallel with the main switch (51), and a control circuit (53) configured to receive the control signal (S5) from the controller (7), wherein the control circuit (53) is configured to switch on the main switch (51) when the control signal (S5) has an on-level and, **characterized in that** the control circuit (53), in order to prevent overheating of the resistor (52), is configured to switch on the main switch (51) when the control signal (S5) has an off-level and at least one of the following conditions is fulfilled:

   a current through the output circuit (45) is higher than a current threshold, a voltage (V5) across the main switch (51) is higher than a voltage threshold.

2. The electronic circuit of claim 1,

   wherein the main switch circuit (5) is further configured to switch on the main switch (51) when a rising slope of the output voltage ($V_{OUT}$) reaches a predefined slope threshold.

3. The electronic circuit of any one of the preceding claims, wherein the bypass circuit (3) comprises a rectifier element.

4. The electronic circuit of any one of claims 1 to 3, wherein the converter stage (2) comprises:

   a rectifier circuit (21); and a boost converter (22), wherein the rectifier circuit (21) is coupled between the input (11, 12) and the boost converter (22).

5. The electronic circuit of claim 4, wherein the bypass circuit (3) is connected between the rectifier circuit (21) and the output.

6. The electronic circuit of claim 4, wherein the bypass circuit (3) is connected in parallel with a series circuit including the rectifier circuit (21) and the boost converter.

7. The electronic circuit of any one of claims 1 to 3, wherein the converter stage (2) comprises a converter with a Totem pole topology.

8. The electronic circuit of any one of the preceding claims, further comprising:
   a further converter stage (8) coupled to the output (13, 14).

9. The electronic circuit of claim 8, wherein the further converter stage (8) is a DC-DC converter stage.

10. A method for operating an electronic circuit, wherein the electronic circuit comprises:

    an input (11, 12) configured to receive an input voltage ($V_{IN}$) and an output (13, 14) configured to provide an output voltage ($V_{OUT}$) to a load (Z); a converter stage (2) coupled between the input (11, 12) and the output (13, 14); an output circuit (45) coupled to the converter stage (2) and the output (13, 14), comprising an output capacitor (4) and a main switch circuit (5) connected in series with the output capacitor (4), and configured to be connected in parallel with the load (Z); a bypass circuit (3) coupled between the input (11, 12) and the output circuit (45); and a controller (7) configured to activate and deactivate the converter stage (2) and provide a control signal (S5) to the main switch circuit (5),

wherein the main switch circuit (5) comprises a main switch (51), and a resistor (52) connected in parallel with the main switch (51), and wherein the method comprises:

switching on the main switch (51) when the control signal (S5) has an on-level and **characterized by**,

in order to prevent overheating of the resistor, switching on the main switch (51) when the control signal (S5) has an off-level and at least one of the following conditions is fulfilled:

a current through the output circuit (45) is higher than a current threshold,
a voltage (V5) across the main switch (51) is higher than a voltage threshold.

11. The method of claim 10, further comprising: switching on the main switch (51) when a rising slope of the output voltage ($V_{OUT}$) reaches a predefined slope threshold.

**Patentansprüche**

1. Elektronische Schaltung, die aufweist:

einen Eingang (11, 12), der dazu ausgebildet ist, eine Eingangsspannung ($V_{IN}$) zu erhalten, und einen Ausgang (13, 14), der dazu ausgebildet ist, einer Last (Z) eine Ausgangsspannung ($V_{OUT}$) bereitzustellen;
eine Wandlerstufe (2), die zwischen den Eingang (11, 12) und den Ausgang (13, 14) gekoppelt ist;
eine Ausgangsschaltung (45), die mit der Wandlerstufe (2) und dem Ausgang (13, 14) gekoppelt ist, die einen Ausgangskondensator (4) und eine zu dem Ausgangskondensator (4) in Reihe geschaltete Hauptschalterschaltung (5) aufweist, wobei der Ausgang (13, 14) einen ersten Ausgangsknoten (13) und einen zweiten Ausgangsknoten (14) aufweist und die Ausgangsschaltung (45) zwischen den ersten Ausgangsknoten (13) und den zweiten Ausgangsknoten (14) geschaltet ist;
eine Bypass-Schaltung (3), die zwischen den Eingang (11, 12) und die Ausgangsschaltung (45) gekoppelt ist; und
einen Controller (7), der dazu ausgebildet ist, die Wandlerstufe (2) zu aktivieren und zu deaktivieren und der Hauptschalterschaltung (5) ein Steuersignal (S5) bereitzustellen,
wobei die Hauptschalterschaltung (5) einen Hauptschalter (51), einen zu dem Hauptschalter (51) parallel geschalteten Widerstand (52) und eine Steuerschaltung (53), die dazu ausgebildet ist, das Steuersignal (S5) von dem Controller (7) zu erhalten, aufweist,
wobei die Steuerschaltung (53) dazu ausgebildet ist, den Hauptschalter (51) einzuschalten, wenn das Steuersignal (S5) einen Ein-Pegel aufweist, und
**dadurch gekennzeichnet, dass**
die Steuerschaltung (53) dazu ausgebildet ist, um ein Überhitzen des Widerstands (52) zu verhindern, den Hauptschalter (51) einzuschalten, wenn das Steuersignal (S5) einen Aus-Pegel aufweist und wenigstens eine der folgenden Bedingungen erfüllt ist:

ein Strom durch die Ausgangsschaltung (45) ist höher als ein Stromschwellenwert,
eine Spannung (V5) über dem Hauptschalter (51) ist höher als ein Spannungsschwellenwert.

2. Elektronische Schaltung nach Anspruch 1, wobei die Hauptschalterschaltung (5) ferner dazu ausgebildet ist, den Hauptschalter (51) einzuschalten, wenn eine ansteigende Flanke der Ausgangsspannung ($V_{OUT}$) einen vordefinierten Steigungsschwellenwert erreicht.

3. Elektronische Schaltung nach einem der vorhergehenden Ansprüche, wobei die Bypass-Schaltung (3) ein Gleichrichterelement aufweist.

4. Elektronische Schaltung nach einem der Ansprüche 1 bis 3, wobei die Wandlerstufe (2) aufweist:

eine Gleichrichterschaltung (21); und
einen Aufwärtswandler (22),
wobei die Gleichrichterschaltung (21) zwischen den Eingang (11, 12) und den Aufwärtswandler (22) gekoppelt ist.

5. Elektronische Schaltung nach Anspruch 4, wobei die Bypass-Schaltung (3) zwischen die Gleichrichterschaltung (21) und den Ausgang geschaltet ist.

6. Elektronische Schaltung nach Anspruch 4, wobei die Bypass-Schaltung (3) zu einer Reihenschaltung, die die Gleichrichterschaltung (21) und den Aufwärtswandler umfasst, parallel geschaltet ist.

7. Elektronische Schaltung nach einem der Ansprüche 1 bis 3, wobei die Wandlerstufe (2) einen Wandler mit einer Totem-Pol-Topologie aufweist.

8. Elektronische Schaltung nach einem der vorhergehenden Ansprüche, die ferner aufweist: eine weitere Wandlerstufe (8), die an den Ausgang (13, 14) gekoppelt ist.

**9.** Elektronische Schaltung nach Anspruch 8, wobei die weitere Wandlerstufe (8) eine DC-DC-Wandlerstufe ist.

**10.** Verfahren zum Betreiben einer elektronischen Schaltung,
wobei die elektronische Schaltung aufweist:

einen Eingang (11, 12), der dazu ausgebildet ist, eine Eingangsspannung ($V_{IN}$) zu erhalten, und einen Ausgang (13, 14), der dazu ausgebildet ist, einer Last (Z) eine Ausgangsspannung ($V_{OUT}$) bereitzustellen;
eine Wandlerstufe (2), die zwischen den Eingang (11, 12) und den Ausgang (13, 14) gekoppelt ist;
eine Ausgangsschaltung (45), die mit der Wandlerstufe (2) und dem Ausgang (13, 14) gekoppelt ist, die einen Ausgangskondensator (4) und eine zu dem Ausgangskondensator (4) in Reihe geschaltete Hauptschalterschaltung (5) aufweist und dazu ausgebildet ist, zu der Last (Z) parallel geschaltet zu werden;
eine Bypass-Schaltung (3), die zwischen den Eingang (11, 12) und die Ausgangsschaltung (45) gekoppelt ist; und
einen Controller (7), der dazu ausgebildet ist, die Wandlerstufe (2) zu aktivieren und zu deaktivieren und der Hauptschalterschaltung (5) ein Steuersignal (S5) bereitzustellen,
wobei die Hauptschalterschaltung (5) einen Hauptschalter (51) und einen zu dem Hauptschalter (51) parallel geschalteten Widerstand (52) aufweist, und
wobei das Verfahren aufweist:

Einschalten des Hauptschalters (51), wenn das Steuersignal (S5) einen Ein-Pegel aufweist, und
**gekennzeichnet durch**,
um ein Überhitzen des Widerstands zu verhindern, Einschalten des Hauptschalters (51), wenn das Steuersignal (S5) einen Aus-Pegel aufweist und wenigstens eine der folgenden Bedingungen erfüllt ist:

ein Strom durch die Ausgangsschaltung (45) ist höher als ein Stromschwellenwert,
eine Spannung (V5) über dem Hauptschalter (51) ist höher als ein Spannungsschwellenwert.

**11.** Verfahren nach Anspruch 10, das ferner aufweist:
Einschalten des Hauptschalters (51), wenn eine ansteigende Flanke der Ausgangsspannung ($V_{OUT}$) einen vordefinierten Steigungsschwellenwert erreicht.

**Revendications**

**1.** Un circuit électronique, comprenant :

une entrée (11, 12) configurée pour recevoir une tension ($V_{IN}$) d'entrée et une sortie (13, 14) configurée pour appliquer une tension ($V_{OUT}$) à une charge (Z) ;
un étage (2) convertisseur monté entre l'entrée (11, 12) et la sortie (13, 14) ;
un circuit (45) de sortie connecté à l'étage (2) convertisseur et à la sortie (13, 14), comprenant un condensateur (4) de sortie et un circuit (5) principal de commutation monté en série avec le condensateur (4) de sortie, dans lequel la sortie (13, 14) comprend un premier nœud (13) de sortie et un deuxième nœud (14) de sortie et le circuit (45) de sortie est monté entre le premier nœud (13) de sortie et le deuxième nœud (14) de
sortie ;
un circuit (3) de dérivation monté entre l'entrée (11, 12) et le circuit (45) de sortie ; et
une unité (7) de commande configurée pour activer et désactiver l'étage (2) convertisseur et appliquer un signal (S5) de commande au circuit (5) principal de commutation,
dans lequel le circuit (5) principal de commutation comprend un interrupteur (51) principal, une résistance (52) montée en parallèle avec l'interrupteur (51) principal et un circuit (53) de commande configuré pour recevoir le signal (S5) de commande provenant de l'unité (7) de commande,
dans lequel le circuit (53) de commande est configuré pour commuter sur l'interrupteur (51) principal, lorsque le signal (S5) de commande a un niveau marche et,
**caractérisé en ce que** le circuit (53) de commande est, afin d'empêcher une surchauffe de la résistance (52), configuré pour commuter sur l'interrupteur (51) principal, lorsque le signal (S5) de commande a un niveau arrêt et lorsqu'au moins l'une des conditions suivantes est satisfaite :

un courant passant dans le circuit (45) de sortie est plus grand qu'un seuil de courant,
une tension (V5) aux bornes de l'interrupteur (51) principal est plus haute qu'un seuil de tension.

**2.** Le circuit électronique de la revendication 1,
dans lequel le circuit (5) principal de commutation est configuré en outre pour commuter sur l'interrupteur (51) principal, lorsqu'une pente montante de la tension ($V_{OUT}$) de sortie atteint un seuil de pente défini à l'avance.

**3.** Le circuit électronique de l'une quelconque des revendications précédentes, dans lequel le circuit (3) de dérivation comprend un élément redresseur.

**4.** Le circuit électronique de l'une quelconque des revendications 1 à 3, dans lequel l'étage (2) convertisseur comprend :

un circuit (21) redresseur ; et
un convertisseur (22) amplificateur,
dans lequel le circuit (21) redresseur est monté entre l'entrée (11, 12) et le convertisseur (22) amplificateur.

**5.** Le circuit électronique de la revendication 4, dans lequel le circuit (3) de dérivation est monté entre le circuit (21) redresseur et la sortie.

**6.** Le circuit électronique de la revendication 4, dans lequel le circuit (3) de dérivation est monté en parallèle avec un circuit série incluant le circuit (21) redresseur et le convertisseur amplificateur.

**7.** Le circuit électronique de l'une quelconque des revendications 1 à 3, dans lequel l'étage (2) convertisseur comprend un convertisseur ayant une topologie de pôle Totem.

**8.** Le circuit électronique de l'une quelconque des revendications précédentes, comprenant en outre :
un autre étage (8) convertisseur connecté à la sortie (13, 14).

**9.** Le circuit électronique de la revendication 8, dans lequel l'autre étage (8) convertisseur est un étage convertisseur courant continu - courant continu.

**10.** Un procédé pour faire fonctionner un circuit électronique, dans lequel le circuit électronique comprend :

une entrée (11, 12) configurée pour recevoir une tension ($V_{IN}$) d'entrée et une sortie (13, 14) configurée pour appliquer une tension ($V_{OUT}$) à une charge (Z) ;
un étage (2) convertisseur monté entre l'entrée (11, 12) et la sortie (13, 14) ;
un circuit (45) de sortie connecté à l'étage (2) convertisseur et à la sortie (13, 14), comprenant un condensateur (4) de sortie et un circuit (5) principal de commutation montés en série avec le condensateur (4) de sortie et configuré pour être monté en parallèle avec la charge (Z) ;
un circuit (3) de dérivation monté entre l'entrée (11, 12) et le circuit (45) de sortie ; et
une unité (7) de commande configurée pour activer et désactiver l'étage (2) convertisseur et appliquer un signal (S5) de commande au circuit (5) principal de commutation,
dans lequel le circuit (5) principal de commutation comprend un interrupteur (51) principal, et une résistance (52) montée en parallèle avec l'interrupteur (51) principal, et
dans lequel le procédé comprend :

commuter sur l'interrupteur (51) principal, lorsque le signal (S5) de commande a un niveau marche et **caractérisé par**,
afin d'empêcher une surchauffe de la résistance, commuter sur l'interrupteur (51) principal, lorsque le signal (S5) de commande a un niveau arrêt et lorsqu'au moins l'une des conditions suivantes est satisfaite :

un courant passant dans le circuit (45) de sortie est plus grand qu'un seuil de courant,
une tension (V5) aux bornes de l'interrupteur (51) principal est plus haute qu'un seuil de tension.

**11.** Le procédé de la revendication 10, comprenant en outre :
commuter sur l'interrupteur (51) principal, lorsqu'une pente montante de la tension ($V_{OUT}$) de sortie atteint un seuil de pente défini à l'avance.

FIG 1

FIG 2

FIG 3

FIG 4

FIG 5

FIG 6

FIG 7

FIG 8

FIG 9

FIG 10

**REFERENCES CITED IN THE DESCRIPTION**

**Patent documents cited in the description**

- JP 2015142485 A
- WO 2017206684 A1
- EP 3567711 A1